# FASCICULE DE BREVET EUROPEEN

(11) **EP 4 747 527 B1**
(45) Date de publication et mention de la délivrance du brevet: **09.12.2026**
(21) Numéro de dépôt: 24727693.4
(22) Date de dépôt: 16.05.2024
(51) Int. Cl.: F17C 5/02

(54) **INSTALLATION ET PROCÉDÉ DE FOURNITURE D'HYDROGÈNE LIQUÉFIÉ**
ANLAGE UND VERFAHREN ZUR HERSTELLUNG VON VERFLÜSSIGTEM WASSERSTOFF
FACILITY AND METHOD FOR PRODUCING LIQUEFIED HYDROGEN

(30) Priorité: 17.07.2023 FR 2307626
(43) Date de publication de la demande: 27.05.2026
(73) Titulaire: L'Air Liquide, Société Anonyme pour l'Etude et l'Exploitation des Procédés Georges Claude, 75007 Paris (FR)
(72) Inventeur: VANDROUX, Emeline, 94503 Champigny sur Marne (FR); GAERTNER, Axelle, 94503 Champigny sur Marne (FR); KEMPEN, Carinne, 94503 Champigny sur Marne (FR); KHALIL-PAILLIER, Yasmin, 94503 Champigny sur Marne (FR)
(74) Mandataire: Air Liquide
(86) Numéro de dépôt international: PCT/EP2024/063582
(87) Numéro de publication internationale: WO 2025/016587

(56) Documents cités:
- FR-A1- 3 086 993
- FR-A1- 3 088 415
- FR-A1- 3 125 322
- US-A1- 2021 301 979
- US-A1- 2021 364 228

## Description

La présente invention porte sur un une installation de fourniture d'hydrogène liquéfié et un procédé de fourniture d'hydrogène liquéfié au moyen d'une telle installation.

Un liquéfacteur d'hydrogène est généralement configuré pour produire de l'hydrogène liquide sans qu'il soit possible de garantir un fonctionnement en continu. En effet, un liquéfacteur est généralement configuré pour être sélectivement dans un premier état dans lequel il est en fonctionnement et dans un deuxième état dans lequel il est à l'arrêt. Dans le premier état, le liquéfacteur produit et délivre de l'hydrogène liquéfié et/ou de l'hydrogène gazeux pur moyenne pression. L'hydrogène est pur lorsque son degré de pureté est supérieur ou égal à 99,9999 % mole. L'hydrogène gazeux dit à moyenne pression lorsque sa pression est supérieure ou égale à 3,6 bara, par exemple comprise entre 3,6 bara et 7 bara. L'hydrogène liquéfié est pur. Dans le deuxième état, le liquéfacteur produit et délivre de l'hydrogène gazeux impur, l'hydrogène gazeux étant notamment à une température supérieure ou égale à -150 °C. L'hydrogène gazeux est impur lorsqu'il comporte un taux d'impuretés supérieur à 1 ppm. Dans le deuxième état, le liquéfacteur peut en outre délivrer un fluide avec un débit inférieur à un seuil minimal, le seuil minimal étant par exemple égal 1 kg par heure. Dans le deuxième état, le débit du fluide en sortie du liquéfacteur peut être nul.

L'hydrogène liquide produit par le liquéfacteur est donc stocké dans un ou plusieurs réservoirs de stockage d'hydrogène liquéfié à partir desquels on remplit des réservoirs à remplir tels que des semi-remorques. Ainsi, même lorsque le liquéfacteur est à l'arrêt, il reste possible d'assurer un remplissage d'un ou plusieurs réservoirs à remplir.

Les documents FR 3 088 415 A1, FR 3 086 996 A1 et FR 3 125 322 A1, décrivent des installations de fourniture d'hydrogène liquéfié.

Lors d'un remplissage d'un réservoir à remplir, il est nécessaire de réaliser une ou plusieurs étapes de balayage et/ou de purge des lignes de transfert mises en œuvre pour le transfert de l'hydrogène liquéfié, depuis le réservoir de stockage vers le réservoir à remplir. Ces étapes de balayage et/ou de purge sont réalisées avec de l'hydrogène gazeux pur provenant du liquéfacteur. Ces étapes de balayage et/ou de purge s'accompagnent nécessairement de compressions/détentes avec de l'hydrogène gazeux pur et moyenne pression provenant du liquéfacteur, pour retirer un gaz inerte tel que de l'azote.

Un problème se pose lorsque le liquéfacteur est à l'arrêt, c'est-à-dire lorsqu'il n'est pas en mesure de fournir de l'hydrogène gazeux pur et moyenne pression. En effet, dans ces conditions, il devient impossible de faire des compressions/détentes lors des étapes de balayage et/ou de purge des lignes de transfert.

La présente invention vise à remédier efficacement à ces inconvénients en proposant une installation de fourniture d'hydrogène liquéfié comprenant :
- une source d'hydrogène gazeux ;
- un liquéfacteur configuré pour être alimenté en hydrogène gazeux par la source d'hydrogène gazeux et pour délivrer de l'hydrogène liquéfié, le liquéfacteur étant configuré pour être sélectivement dans un premier état dans lequel il est en fonctionnement et dans un deuxième état dans lequel il est à l'arrêt ;
- au moins un réservoir de stockage d'hydrogène liquéfié configuré pour recevoir de l'hydrogène liquéfié en provenance du liquéfacteur, via une conduite d'alimentation et étant configuré pour stocker l'hydrogène liquéfié ;
- au moins une ligne de transfert configurée pour permettre le transfert d'hydrogène liquéfié du réservoir de stockage vers un réservoir à remplir, la ligne de transfert étant en outre reliée fluidiquement au réservoir de stockage par au moins une première conduite de purge configurée pour permettre le transfert d'hydrogène gazeux basse pression depuis le réservoir de stockage vers la ligne de transfert, l'hydrogène gazeux basse pression ayant notamment une pression inférieure ou égale à 3,5 bara, l'hydrogène gazeux basse pression appartenant à un ciel gazeux du réservoir de stockage ;
- une source de gaz inerte configurée pour délivrer un gaz inerte tel que de l'azote ou de l'hélium ;
- une conduite de gaz inerte configurée pour permettre le transfert du gaz inerte dans la ligne de transfert.

L'invention permet ainsi de réaliser un balayage et/ou une purge d'un équipement d'une installation de liquéfaction tel qu'une ligne de transfert, lorsque le liquéfacteur est à l'arrêt, c'est-à-dire lorsqu'il délivre un fluide avec un débit inférieur à un seuil minimal, le seuil minimal étant par exemple égal 1 kg par heure, ou bien lorsqu'il délivre de l'hydrogène impur, l'hydrogène impur ayant notamment un taux d'impuretés supérieur à 1 ppm ou étant à une température supérieure ou égale à -150 °C.

Selon une réalisation, l'hydrogène basse pression a une pression comprise entre 1,0 et 3,5 bara.

Selon une réalisation, l'installation comporte une unité de commande configurée pour sélectivement permettre le transfert d'hydrogène gazeux basse pression depuis le réservoir de stockage vers la ligne de transfert, l'hydrogène gazeux basse pression appartenant à un ciel gazeux du réservoir de stockage.

Selon une réalisation, l'unité de commande est configurée pour sélectivement permettre le transfert d'hydrogène gazeux pur moyenne pression, depuis le liquéfacteur vers la ligne de transfert.

Selon une réalisation, l'unité de commande est configurée pour sélectivement permettre le transfert de gaz inerte, depuis la conduite de gaz inerte vers la ligne de transfert.

Selon une réalisation, l'hydrogène gazeux pur moyenne pression provenant du liquéfacteur, a une pression comprise entre 3,6 bara et 7 bara.

Selon une réalisation, l'hydrogène gazeux pur moyenne pression provenant du liquéfacteur, a un degré de pureté supérieur ou égal à 99,9999 % mole.

Selon une réalisation, la conduite d'alimentation est munie d'une vanne d'alimentation pour autoriser ou empêcher l'hydrogène liquéfié provenant du liquéfacteur d'entrer dans le réservoir de stockage.

Selon une réalisation, l'installation est configurée pour permettre un transfert dans la ligne de transfert d'au moins une partie du gaz inerte délivré par la source de gaz inerte, notamment via la conduite de gaz inerte.

Selon une réalisation, la conduite de gaz inerte est munie d'une vanne de gaz inerte, notamment configurée pour sélectivement permettre le transfert ou empêcher le transfert de gaz inerte dans la ligne de transfert.

Selon une réalisation, l'installation comporte une conduite de transfert reliant fluidiquement le réservoir de stockage à la ligne de transfert, en étant notamment configurée pour permettre le transfert d'hydrogène liquéfié du réservoir de stockage vers la ligne de transfert.

Selon une réalisation, la conduite de transfert est munie d'une vanne de transfert pour autoriser ou empêcher l'hydrogène liquéfié provenant du réservoir de stockage, d'être transféré dans la ligne de transfert.

Selon une réalisation, la conduite de purge est munie d'une vanne de purge pour autoriser ou empêcher le transfert d'hydrogène gazeux basse pression depuis le ciel gazeux du réservoir de stockage vers la ligne de transfert.

Selon une réalisation, l'installation comporte une conduite de compressions/détentes munie d'une vanne de compressions/détentes, reliant fluidiquement le liquéfacteur à la ligne de transfert, la conduite de compressions/détentes étant configurée pour permettre le transfert d'hydrogène gazeux pur moyenne pression, provenant du liquéfacteur dans la ligne de transfert.

Selon une réalisation, l'installation comporte une conduite de collecte munie d'une vanne de collecte, reliant fluidiquement la ligne de transfert au liquéfacteur, la conduite de collecte étant configurée pour permettre le transfert d'un gaz collecté dans le ciel gazeux du réservoir à remplir, à destination du liquéfacteur, en vue de son recyclage par le liquéfacteur.

Selon une réalisation, le réservoir à remplir comporte une citerne mobile telle qu'un camion-citerne.

L'invention concerne en outre un procédé de fourniture d'hydrogène liquéfié au moyen d'une installation telle que décrite ci-dessus, le liquéfacteur étant dans le deuxième état, le procédé comportant les étapes de :
- a) balayer et/ou purger la ligne de transfert avec du gaz inerte de la source de gaz inerte, notamment tant que la ligne de transfert comporte un taux d'O2 supérieur ou égal à 1 ppm, le gaz inerte provenant notamment de la conduite de gaz inerte ;
- b) balayer et/ou purger la ligne de transfert avec de l'hydrogène gazeux basse pression provenant du ciel gazeux du réservoir de stockage, notamment tant que la ligne de transfert comporte un taux de N2 supérieur ou égal à 5 ppm ou tant que la ligne de transfert comporte un taux de He supérieur ou égal à 5 ppm, l'étape b) étant notamment dépourvue de compressions/détentes de l'hydrogène gazeux basse pression tant que la ligne de transfert comporte un taux de N2 supérieur ou égal à 5 ppm ou tant que la ligne de transfert comporte un taux de He supérieur ou égal à 5 ppm.

Selon une réalisation, les étapes a) et b) sont réalisées successivement, l'une après l'autre.

Selon une réalisation, la pression dans la première conduite de purge est constante dans le temps ou elle diminue dans le temps, pendant toute la durée de l'étape b).

Selon une réalisation, le procédé comporte après l'étape b), une étape de transfert d'hydrogène liquéfié du liquéfacteur vers le réservoir à remplir ou du réservoir de stockage vers le réservoir à remplir.

Selon une réalisation, le liquéfacteur étant dans le premier état, le procédé comporte les étapes de :
- c) balayer et/ou purger la ligne de transfert avec un gaz inerte tel que de l'azote ou de l'hélium, provenant d'une source d'azote gazeux ou d'hélium gazeux, notamment tant que la ligne de transfert comporte un taux d'O2 supérieur ou égal à 1 ppm ;
- d) balayer et/ou purger la ligne de transfert avec de l'hydrogène gazeux pur moyenne pression provenant du liquéfacteur, notamment tant que la ligne de transfert comporte un taux de N2 supérieur ou égal à 5 ppm ou tant que la ligne de transfert comporte un taux de He supérieur ou égal à 5 ppm, ladite étape d) comportant un balayage à l'hydrogène gazeux pur moyenne pression provenant du liquéfacteur suivi et d'une alternance de compressions/détentes avec de l'hydrogène gazeux pur moyenne pression provenant du liquéfacteur.

Selon une réalisation, le procédé comporte, après l'étape d), une étape de transfert d'hydrogène liquéfié du liquéfacteur vers le réservoir à remplir ou du réservoir de stockage vers le réservoir à remplir.

Selon une réalisation, le procédé comporte, préalablement à l'étape a), ou préalablement à l'étape c), une étape x) de détermination de l'état de fonctionnement du liquéfacteur entre le premier état et le deuxième état et un balayage/purge de la ligne de transfert soit par la mise en œuvre des étapes a) et b) ou par la mise en œuvre des étapes c) et d).

L'invention concerne en outre une installation de fourniture d'hydrogène liquéfié comprenant :
- une source d'hydrogène gazeux ;
- un liquéfacteur configuré pour être alimenté en hydrogène gazeux par la source d'hydrogène gazeux et pour délivrer de l'hydrogène liquéfié, le liquéfacteur étant configuré pour être sélectivement dans un premier état dans lequel il est en fonctionnement et dans un deuxième état dans lequel il est à l'arrêt ;
- au moins un réservoir de stockage d'hydrogène liquéfié configuré pour recevoir de l'hydrogène liquéfié en provenance du liquéfacteur, via une conduite d'alimentation et étant configuré pour stocker l'hydrogène liquéfié ;
- au moins une ligne de transfert configurée pour permettre le transfert d'hydrogène liquéfié du réservoir de stockage vers un réservoir à remplir, la ligne de transfert étant en outre reliée fluidiquement au réservoir de stockage par au moins une première conduite de purge configurée pour permettre le transfert d'hydrogène gazeux basse pression depuis le réservoir de stockage vers la ligne de transfert, l'hydrogène gazeux basse pression ayant notamment une pression inférieure ou égale à 3,5 bara, l'hydrogène gazeux basse pression appartenant à un ciel gazeux du réservoir de stockage, le liquéfacteur étant dans le deuxième état.

Selon une réalisation, l'installation comporte une source de gaz inerte configurée pour délivrer un gaz inerte tel que de l'azote ou de l'hélium.

Selon une réalisation, l'installation comporte une conduite de gaz inerte configurée pour permettre le transfert du gaz inerte dans la ligne de transfert.

Selon une réalisation, l'installation comporte une conduite de transfert reliant fluidiquement le réservoir de stockage à la ligne de transfert, en étant notamment configurée pour permettre le transfert d'hydrogène liquéfié du réservoir de stockage vers la ligne de transfert.

L'invention concerne en outre un procédé de fourniture d'hydrogène liquéfié au moyen d'une installation telle que décrite ci-dessus, le liquéfacteur étant dans le deuxième état, le procédé comportant les étapes de :
- a) balayer et/ou purger la ligne de transfert avec un gaz inerte, tel que de l'azote ou de l'hélium provenant d'une source d'azote gazeux ou d'hélium gazeux, notamment tant que la ligne de transfert comporte un taux d'O2 supérieur ou égal à 1 ppm ;
- b) balayer et/ou purger la ligne de transfert avec de l'hydrogène gazeux basse pression provenant du ciel gazeux du réservoir de stockage, notamment tant que la ligne de transfert comporte un taux de N2 supérieur ou égal à 5 ppm ou tant que la ligne de transfert comporte un taux de He supérieur ou égal à 5 ppm, l'étape b) étant notamment dépourvue de compressions/détentes de l'hydrogène gazeux basse pression tant que la ligne de transfert comporte un taux de N2 supérieur ou égal à 5 ppm ou tant que la ligne de transfert comporte un taux de He supérieur ou égal à 5 ppm.

Selon une réalisation, l'étape de balayer et/ou purger la ligne de transfert avec un gaz inerte est réalisée par un balayage et/ou une purge de la ligne de transfert avec le gaz inerte délivré par la source de gaz inerte.

L'invention peut encore concerner tout dispositif ou procédé alternatif comprenant toute combinaison des caractéristiques ci-dessus ou ci-dessous.

L'invention sera mieux comprise à la lecture de la description qui suit et à l'examen des figures qui l'accompagnent. Ces figures ne sont données qu'à titre illustratif mais nullement limitatif de l'invention.
[Fig.1] La [Fig.1] est une représentation schématique d'une installation selon l'invention ; et
[Fig.2] la [Fig.2] est une représentation schématique d'un procédé selon l'invention.

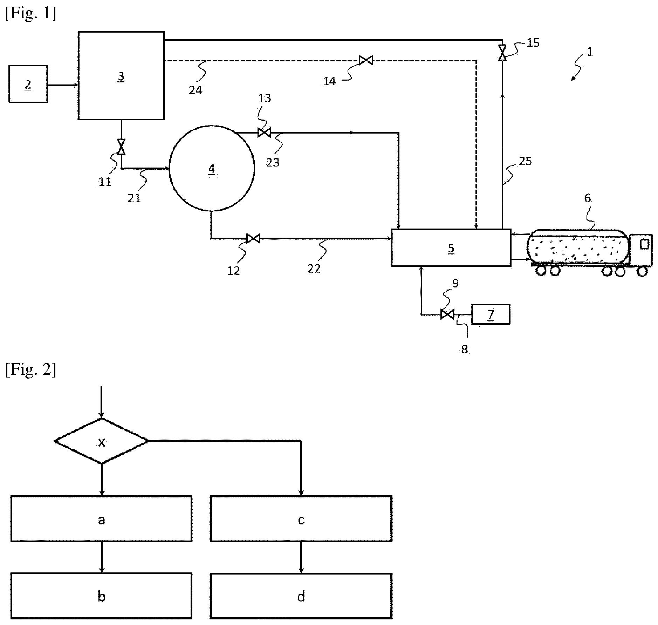

En référence à la [Fig.1], une installation 1 de fourniture d'hydrogène liquéfié comprend un liquéfacteur 3 et une source 2 d'hydrogène gazeux. Le liquéfacteur 3 est configuré pour être alimenté en hydrogène gazeux par la source 2 et pour délivrer de l'hydrogène liquéfié.

Le liquéfacteur 3 est configuré pour être sélectivement dans un premier état dans lequel il est en fonctionnement en délivrant de l'hydrogène liquéfié et/ou en délivrant de l'hydrogène gazeux pur moyenne pression, et dans un deuxième état dans lequel il est à l'arrêt.

Dans le premier état, l'hydrogène gazeux pur moyenne pression a un degré de pureté supérieur ou égal à 99,9999 % mole.

Dans le premier état, le liquéfacteur 3 délivre de l'hydrogène gazeux pur moyenne pression dont la pression est comprise entre 3,6 bara et 7 bara.

Dans le deuxième état, le liquéfacteur 3 produit et délivre de l'hydrogène gazeux impur, l'hydrogène gazeux étant notamment à une température supérieure ou égale à -150 °C. L'hydrogène gazeux est impur lorsqu'il comporte un taux d'impuretés supérieur à 1 ppm.

Dans le deuxième état, le liquéfacteur peut en outre délivrer un fluide avec un débit inférieur à un seuil minimal, le seuil minimal étant par exemple égal 1 kg par heure. Dans le deuxième état, le débit du fluide en sortie du liquéfacteur peut être nul.

L'installation 1 comporte au moins un réservoir de stockage 4 d'hydrogène liquéfié configuré pour recevoir de l'hydrogène liquéfié en provenance du liquéfacteur 3, via une conduite d'alimentation 21 et étant configuré pour stocker l'hydrogène liquéfié.

L'installation 1 comporte au moins une ligne de transfert 5 configurée pour permettre le transfert d'hydrogène liquéfié du réservoir de stockage 4 vers un réservoir à remplir 6, la ligne de transfert 5 étant en outre reliée fluidiquement au réservoir de stockage 4 par au moins une première conduite de purge 23 configurée pour permettre le transfert d'hydrogène gazeux basse pression depuis le réservoir de stockage 4 vers la ligne de transfert 5, l'hydrogène gazeux basse pression appartenant à un ciel gazeux du réservoir de stockage 4.

L'hydrogène gazeux basse pression a une pression inférieure ou égale à 3,5 bara.

La conduite d'alimentation 21 est munie d'une vanne d'alimentation 11 pour autoriser ou empêcher l'hydrogène liquéfié provenant du liquéfacteur 3 d'entrer dans le réservoir de stockage 4.

L'installation comporte une conduite de gaz inerte 8 tel que de l'azote ou de l'hélium.

L'installation comporte une source de gaz inerte 7, configurée pour délivrer du gaz inerte tel que de l'azote ou de l'hélium.

L'installation est configurée pour permettre sélectivement le transfert, dans la ligne de transfert 5, d'au moins une partie du gaz inerte délivré par la source de gaz inerte 7, via la conduite de gaz inerte 8.

La conduite de gaz inerte est munie d'une vanne de gaz inerte 9, notamment configurée pour sélectivement permettre le transfert ou empêcher le transfert de gaz inerte dans la ligne de transfert 5.

L'installation comporte une conduite de transfert 22 reliant fluidiquement le réservoir de stockage 4 à la ligne de transfert 5, en étant notamment configurée pour permettre le transfert d'hydrogène liquéfié du réservoir de stockage 4 vers la ligne de transfert 5.

La conduite de transfert 22 est munie d'une vanne de transfert 12 pour autoriser ou empêcher l'hydrogène liquéfié provenant du réservoir de stockage 4, d'être transféré dans la ligne de transfert 5.

La conduite de purge 23 est munie d'une vanne de purge 13 pour autoriser ou empêcher le transfert d'hydrogène gazeux basse pression depuis le ciel gazeux du réservoir de stockage 4 vers la ligne de transfert 5.

L'installation 1 comporte une conduite de compressions/détentes 24 munie d'une vanne de compressions/détentes 14, configurée pour permettre le transfert d'hydrogène gazeux pur provenant du liquéfacteur 3 dans la ligne de transfert 5.

L'installation 1 comporte une conduite de collecte 25 munie d'une vanne de collecte 15, configurées pour permettre le transfert d'un gaz collecté dans le ciel gazeux du réservoir à remplir 6, à destination du liquéfacteur 3, en vue de son recyclage par le liquéfacteur 3.

Le réservoir à remplir 6 comporte une citerne mobile tel qu'un camion-citerne.

La [Fig.2] représente un procédé de fourniture d'hydrogène liquéfié au moyen d'une installation 1 telle que décrite ci-dessus.

Le liquéfacteur 3 étant dans le deuxième état, le procédé comporte les étapes :
- a) balayer et/ou purger la ligne de transfert 5 avec du gaz inerte de la source de gaz inerte, notamment tant que la ligne de transfert 5 comporte un taux d'O2 supérieur ou égal à 1 ppm ;
- b) balayer et/ou purger la ligne de transfert 5 avec de l'hydrogène gazeux basse pression provenant du ciel gazeux du réservoir de stockage 4, notamment tant que la ligne de transfert 5 comporte un taux de N2 supérieur ou égal à 5 ppm ou tant que la ligne de transfert 5 comporte un taux de He supérieur ou égal à 5 ppm, l'étape b) étant notamment dépourvue de compressions/détentes de l'hydrogène gazeux basse pression tant que la ligne de transfert comporte un taux de N2 supérieur ou égal à 5 ppm ou tant que la ligne de transfert comporte un taux de He supérieur ou égal à 5 ppm.

Le gaz inerte peut être de l'azote ou de l'hélium.

La source de gaz inerte peut être une source d'azote gazeux ou d'hélium gazeux.

Les étapes a) et b) sont réalisées successivement, l'une après l'autre.

La pression dans la première conduite de purge 23 est constante dans le temps ou elle diminue dans le temps, pendant toute la durée de l'étape b).

Le procédé comporte après l'étape b), une étape de transfert d'hydrogène liquéfié du liquéfacteur 3 vers le réservoir à remplir 6 ou du réservoir de stockage 4 vers le réservoir à remplir 6.

Le liquéfacteur 3 étant dans le premier état, le procédé comportant les étapes :
- c) balayer et/ou purger la ligne de transfert avec un gaz inerte tel que de l'azote ou de l'hélium, provenant d'une source d'azote gazeux ou d'hélium gazeux, notamment tant que la ligne de transfert comporte un taux d'O2 supérieur ou égal à 1 ppm ;
- d) balayer et/ou purger la ligne de transfert avec de l'hydrogène gazeux pur moyenne pression provenant du liquéfacteur 3, notamment tant que la ligne de transfert comporte un taux de N2 supérieur ou égal à 5 ppm ou tant que la ligne de transfert comporte un taux de He supérieur ou égal à 5 ppm, ladite étape d) comportant un balayage à l'hydrogène gazeux provenant du liquéfacteur 3 suivi et d'une alternance de compressions/détentes avec de l'hydrogène gazeux pur moyenne pression provenant du liquéfacteur 3.

Le procédé comporte après l'étape d), une étape de transfert d'hydrogène liquéfié du liquéfacteur 3 vers le réservoir à remplir ou du réservoir de stockage 4 vers le réservoir à remplir.

Le procédé comporte préalablement à l'étape a), ou préalablement à l'étape c), une étape x) de détermination de l'état de fonctionnement du liquéfacteur entre le premier état et le deuxième état et un balayage/purge de la ligne de transfert soit par la mise en œuvre des étapes a) et b) ou par la mise en œuvre des étapes c) et d).

## Revendications

1. Installation (1) de fourniture d'hydrogène liquéfié comprenant :
- une source d'hydrogène gazeux (2) ;
- un liquéfacteur (3) configuré pour être alimenté en hydrogène gazeux par la source d'hydrogène gazeux (2) et pour délivrer de l'hydrogène liquéfié, le liquéfacteur (3) étant configuré pour être sélectivement dans un premier état dans lequel il est en fonctionnement et dans un deuxième état dans lequel il est à l'arrêt ;
- au moins un réservoir de stockage (4) d'hydrogène liquéfié configuré pour recevoir de l'hydrogène liquéfié en provenance du liquéfacteur (3), via une conduite d'alimentation (21) et étant configuré pour stocker l'hydrogène liquéfié ;
- au moins une ligne de transfert (5) configurée pour permettre le transfert d'hydrogène liquéfié du réservoir de stockage (4) vers un réservoir à remplir (6), la ligne de transfert (5) étant en outre reliée fluidiquement au réservoir de stockage (4) par au moins une première conduite de purge (23) configurée pour permettre le transfert d'hydrogène gazeux basse pression depuis le réservoir de stockage (4) vers la ligne de transfert (5), l'hydrogène gazeux basse pression ayant notamment une pression inférieure ou égale à 3,5 bara, l'hydrogène gazeux basse pression appartenant à un ciel gazeux du réservoir de stockage (4), **caractérisée en ce qu'**elle comprend:
- une source de gaz inerte (7) configurée pour délivrer un gaz inerte tel que de l'azote ou de l'hélium ;
- une conduite de gaz inerte (8) configurée pour permettre le transfert du gaz inerte dans la ligne de transfert (5).

2. Procédé de fourniture d'hydrogène liquéfié au moyen d'une installation (1) selon la revendication précédente, le liquéfacteur (3) étant dans le deuxième état, le procédé comportant les étapes de :
a) balayer et/ou purger la ligne de transfert (5) avec du gaz inerte de la source de gaz inerte (7), notamment tant que la ligne de transfert (5) comporte un taux d'O2 supérieur ou égal à 1 ppm, le gaz inerte provenant notamment de la conduite de gaz inerte (8) ;
b) balayer et/ou purger la ligne de transfert (5) avec de l'hydrogène gazeux basse pression provenant du ciel gazeux du réservoir de stockage (4), notamment tant que la ligne de transfert (5) comporte un taux de N2 supérieur ou égal à 5 ppm ou tant que la ligne de transfert (5) comporte un taux de He supérieur ou égal à 5 ppm, l'étape b) étant notamment dépourvue de compressions/détentes de l'hydrogène gazeux basse pression tant que la ligne de transfert (5) comporte un taux de N2 supérieur ou égal à 5 ppm ou tant que la ligne de transfert (5) comporte un taux de He supérieur ou égal à 5 ppm.

3. Procédé selon la revendication précédente, les étapes a) et b) étant réalisées successivement, l'une après l'autre.

4. Procédé selon l'une des revendications 2 à 3, la pression dans la première conduite de purge (23) étant constante dans le temps ou diminuant dans le temps, pendant toute la durée de l'étape b).

5. Procédé selon l'une des revendications 2 à 4, comportant après l'étape b), une étape de transfert d'hydrogène liquéfié du liquéfacteur (3) vers le réservoir à remplir (6) ou du réservoir de stockage (4) vers le réservoir à remplir (6).

6. Procédé selon l'une des revendications 2 à 5, le liquéfacteur (3) étant dans le premier état, le procédé comportant les étapes de :
c) balayer et/ou purger la ligne de transfert (5) avec un gaz inerte tel que de l'azote ou de l'hélium, provenant d'une source d'azote gazeux ou d'hélium gazeux, notamment tant que la ligne de transfert (5) comporte un taux d'O2 supérieur ou égal à 1 ppm ;
d) balayer et/ou purger la ligne de transfert (5) avec de l'hydrogène gazeux pur moyenne pression provenant du liquéfacteur (3), notamment tant que la ligne de transfert (5) comporte un taux de N2 supérieur ou égal à 5 ppm ou tant que la ligne de transfert (5) comporte un taux de He supérieur ou égal à 5 ppm, ladite étape d) comportant un balayage à l'hydrogène gazeux pur moyenne pression provenant du liquéfacteur (3) suivi et d'une alternance de compressions/détentes avec de l'hydrogène gazeux pur moyenne pression provenant du liquéfacteur (3).

7. Procédé selon la revendication précédente, comportant après l'étape d), une étape de transfert d'hydrogène liquéfié du liquéfacteur (3) vers le réservoir à remplir (6) ou du réservoir de stockage (4) vers le réservoir à remplir (6).

8. Procédé selon l'une des revendications 2 à 7, comportant préalablement à l'étape a), ou préalablement à l'étape c), une étape x) de détermination de l'état de fonctionnement du liquéfacteur entre le premier état et le deuxième état et un balayage/purge de la ligne de transfert (5) soit par la mise en œuvre des étapes a) et b) ou par la mise en œuvre des étapes c) et d).

## Patentansprüche

1. Anlage (1) zur Bereitstellung von verflüssigtem Wasserstoff, umfassend:
- eine Quelle (2) für gasförmigen Wasserstoff;
- einen Verflüssiger (3), der dafür konfiguriert ist, von der Quelle (2) für gasförmigen Wasserstoff mit gasförmigem Wasserstoff versorgt zu werden und verflüssigten Wasserstoff abzugeben, wobei der Verflüssiger (3) dafür konfiguriert ist, sich wahlweise in einem ersten Zustand, in dem er in Betrieb ist, und in einem zweiten Zustand, in dem er stillsteht, zu befinden;
- mindestens einen Speichertank (4) für verflüssigten Wasserstoff, der dafür konfiguriert ist, verflüssigten Wasserstoff aus dem Verflüssiger (3) über eine Zuleitung (21) aufzunehmen, und dafür konfiguriert ist, den verflüssigten Wasserstoff zu speichern;
- mindestens eine Transferleitung (5), die dafür konfiguriert ist, den Transfer von verflüssigtem Wasserstoff aus dem Speichertank (4) zu einem zu befüllenden Tank (6) zu ermöglichen, wobei die Transferleitung (5) ferner mit dem Speichertank (4) über mindestens eine erste Spülleitung (23) fluidisch verbunden ist, die dafür konfiguriert ist, den Transfer von gasförmigem Niederdruckwasserstoff aus dem Speichertank (4) zu der Transferleitung (5) zu ermöglichen, wobei der gasförmige Niederdruckwasserstoff insbesondere einen Druck von kleiner oder gleich 3,5 bara aufweist, wobei der gasförmige Niederdruckwasserstoff zu einem Gasraum des Speichertanks (4) gehört, **dadurch gekennzeichnet, dass** sie umfasst:
- eine Inertgasquelle (7), die dafür konfiguriert ist, ein Inertgas wie Stickstoff oder Helium abzugeben;
- eine Inertgasleitung (8), die dafür konfiguriert ist, den Transfer des Inertgases in die Transferleitung (5) zu ermöglichen.

2. Verfahren zur Bereitstellung von verflüssigtem Wasserstoff mittels einer Anlage (1) nach dem vorhergehenden Anspruch, wobei sich der Verflüssiger (3) im zweiten Zustand befindet, wobei das Verfahren die folgenden Schritte aufweist:
a) Spülen und/oder Purgen der Transferleitung (5) mit Inertgas aus der Inertgasquelle (7), insbesondere solange die Transferleitung (5) einen O2-Gehalt von größer oder gleich 1 ppm aufweist, wobei das Inertgas insbesondere aus der Inertgasleitung (8) stammt;
b) Spülen und/oder Purgen der Transferleitung (5) mit gasförmigem Niederdruckwasserstoff aus dem Gasraum des Speichertanks (4), insbesondere solange die Transferleitung (5) einen N2-Gehalt von größer oder gleich 5 ppm aufweist oder solange die Transferleitung (5) einen He-Gehalt von größer oder gleich 5 ppm aufweist, wobei Schritt b) insbesondere frei von Kompressionen/Expansionen des gasförmigen Niederdruckwasserstoffs ist, solange die Transferleitung (5) einen N2-Gehalt von größer oder gleich 5 ppm aufweist oder solange die Transferleitung (5) einen He-Gehalt von größer oder gleich 5 ppm aufweist.

3. Verfahren nach dem vorhergehenden Anspruch, wobei die Schritte a) und b) nacheinander, einer nach dem anderen, durchgeführt werden.

4. Verfahren nach einem der Ansprüche 2 bis 3, wobei der Druck in der ersten Spülleitung (23) über die gesamte Dauer des Schritts b) zeitlich konstant ist oder zeitlich abnimmt.

5. Verfahren nach einem der Ansprüche 2 bis 4, aufweisend nach Schritt b) einen Schritt des Transfers von verflüssigtem Wasserstoff aus dem Verflüssiger (3) zu dem zu befüllenden Tank (6) oder aus dem Speichertank (4) zu dem zu befüllenden Tank (6).

6. Verfahren nach einem der Ansprüche 2 bis 5, wobei sich der Verflüssiger (3) im ersten Zustand befindet, wobei das Verfahren die folgenden Schritte aufweist:
c) Spülen und/oder Purgen der Transferleitung (5) mit einem Inertgas wie Stickstoff oder Helium aus einer Quelle für gasförmigen Stickstoff oder gasförmiges Helium, insbesondere solange die Transferleitung (5) einen O2-Gehalt von größer oder gleich 1 ppm aufweist;
d) Spülen und/oder Purgen der Transferleitung (5) mit reinem gasförmigem Mitteldruckwasserstoff aus dem Verflüssiger (3), insbesondere solange die Transferleitung (5) einen N2-Gehalt von größer oder gleich 5 ppm aufweist oder solange die Transferleitung (5) einen He-Gehalt von größer oder gleich 5 ppm aufweist, wobei der Schritt d) ein Spülen mit reinem gasförmigem Mitteldruckwasserstoff aus dem Verflüssiger (3), gefolgt von einem Wechsel von Kompressionen/Expansionen mit reinem gasförmigem Mitteldruckwasserstoff aus dem Verflüssiger (3), aufweist.

7. Verfahren nach dem vorhergehenden Anspruch, aufweisend nach Schritt d) einen Schritt des Transfers von verflüssigtem Wasserstoff aus dem Verflüssiger (3) zu dem zu befüllenden Tank (6) oder aus dem Speichertank (4) zu dem zu befüllenden Tank (6).

8. Verfahren nach einem der Ansprüche 2 bis 7, aufweisend vor Schritt a) oder vor Schritt c) einen Schritt x) des Bestimmens des Betriebszustands des Verflüssigers zwischen dem ersten Zustand und dem zweiten Zustand und ein Spülen/Purgen der Transferleitung (5) entweder durch Durchführung der Schritte a) und b) oder durch Durchführung der Schritte c) und d).

## Claims

1. An installation (1) for supplying liquefied hydrogen comprising:
- a gaseous hydrogen source (2);
- a liquefier (3) configured to be supplied with gaseous hydrogen by the gaseous hydrogen source (2) and to deliver liquefied hydrogen, the liquefier (3) being configured to be selectively in a first state in which it is in operation and in a second state in which it is stopped;
- at least one storage tank (4) for liquefied hydrogen configured to receive liquefied hydrogen coming from the liquefier (3), via a supply line (21) and being configured to store the liquefied hydrogen;
- at least one transfer line (5) configured to allow the transfer of liquefied hydrogen from the storage tank (4) to a tank to be filled (6), the transfer line (5) being further fluidically connected to the storage tank (4) by at least a first purge line (23) configured to allow the transfer of low-pressure gaseous hydrogen from the storage tank (4) to the transfer line (5), the low-pressure gaseous hydrogen having in particular a pressure of less than or equal to 3.5 bara, the low-pressure gaseous hydrogen belonging to a gas headspace of the storage tank (4), **characterized in that** it comprises:
- an inert gas source (7) configured to deliver an inert gas such as nitrogen or helium;
- an inert gas line (8) configured to allow the transfer of the inert gas into the transfer line (5).

2. The method of supplying liquefied hydrogen by means of an installation (1) according to the preceding claim, the liquefier (3) being in the second state, the method comprising the steps of:
a) flushing and/or purging the transfer line (5) with inert gas from the inert gas source (7), in particular as long as the transfer line (5) contains an O2 level greater than or equal to 1 ppm, the inert gas coming in particular from the inert gas line (8);
b) flushing and/or purging the transfer line (5) with low-pressure gaseous hydrogen coming from the gas headspace of the storage tank (4), in particular as long as the transfer line (5) contains an N2 level greater than or equal to 5 ppm or as long as the transfer line (5) contains an He level greater than or equal to 5 ppm, step b) in particular being devoid of compressions/expansions of the low-pressure gaseous hydrogen as long as the transfer line (5) contains an N2 level greater than or equal to 5 ppm or as long as the transfer line (5) contains an He level greater than or equal to 5 ppm.

3. The method according to the preceding claim, steps a) and b) being carried out successively, one after the other.

4. The method according to one of claims 2 to 3, the pressure in the first purge line (23) being constant over time or decreasing over time, throughout the duration of step b).

5. The method according to one of claims 2 to 4, comprising, after step b), a step of transferring liquefied hydrogen from the liquefier (3) to the tank to be filled (6) or from the storage tank (4) to the tank to be filled (6).

6. The method according to one of claims 2 to 5, the liquefier (3) being in the first state, the method comprising the steps of:
c) flushing and/or purging the transfer line (5) with an inert gas such as nitrogen or helium, coming from a gaseous nitrogen or gaseous helium source, in particular as long as the transfer line (5) contains an O2 level greater than or equal to 1 ppm;
d) flushing and/or purging the transfer line (5) with medium-pressure pure gaseous hydrogen coming from the liquefier (3), in particular as long as the transfer line (5) contains an N2 level greater than or equal to 5 ppm or as long as the transfer line (5) contains an He level greater than or equal to 5 ppm, said step d) comprising a flushing with medium-pressure pure gaseous hydrogen coming from the liquefier (3) followed by an alternation of compressions/expansions with medium-pressure pure gaseous hydrogen coming from the liquefier (3).

7. The method according to the preceding claim, comprising, after step d), a step of transferring liquefied hydrogen from the liquefier (3) to the tank to be filled (6) or from the storage tank (4) to the tank to be filled (6).

8. The method according to one of claims 2 to 7, comprising, prior to step a), or prior to step c), a step x) of determining the operating state of the liquefier between the first state and the second state and a flushing/purging of the transfer line (5) either by implementing steps a) and b) or by implementing steps c) and d).
